## Europäisches Patentamt

## European Patent Office

## Office européen des brevets

(11) Veröffentlichungsnummer: **0 294 498**
**B1**

(12) # EUROPÄISCHE PATENTSCHRIFT

(45) Veröffentlichungstag der Patentschrift:
**02.11.89**

(51) Int. Cl.⁴: **B65G 13/071**, B65G 13/04,
B65G 13/11

(21) Anmeldenummer: **87108282.2**

(22) Anmeldetag: **09.06.87**

(54) **Friktionsrollenbahn mit einem Gehäuse.**

(43) Veröffentlichungstag der Anmeldung:
**14.12.88 Patentblatt 88/50**

(45) Bekanntmachung des Hinweises auf die Patenterteilung:
**02.11.89 Patentblatt 89/44**

(84) Benannte Vertragsstaaten:
**AT BE CH DE ES FR GB GR IT LI NL SE**

(56) Entgegenhaltungen:
**EP-A- 0 180 710**
**CH-A- 579 492**
**DE-A- 2 508 365**
**DE-A- 3 017 942**
**US-A- 2 917 148**

(73) Patentinhaber: **CARL SCHENCK AG,**
**Landwehrstrasse 55 Postfach 40 18,**
**D-6100 Darmstadt(DE)**

(72) Erfinder: **Zörgiebel, Karl Heinz, Marktplatz 6,**
**D-6101 Reichelsheim(DE)**

(74) Vertreter: **Dallhammer, Herbert, Dipl.-Ing. et al, CARL**
**SCHENCK AG Patentabteilung**
**Postfach 4018 Landwehrstrasse 55,**
**D-6100 Darmstadt(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Friktionsrollenbahn mit einem Gehäuse, einer Gehäuseabdeckung mit Durchtrittsöffnungen für die Gehäuseabdeckung teilweise durchdringende Friktionsrollen, die gegen axiale Verschiebung gesichert sind und die von einer im Gehäuse verlaufenden Antriebswelle angetrieben werden.

Durch die deutsche Patentschrift 30 17 942 ist eine Friktionsrollenbahn der eingangs genannten Gattung bekannt geworden, bei der auf einer Antriebswelle Gleitringe angeordnet sind, die unverdrehbar mit der Antriebswelle verbunden sind und wobei über Friktion ein den Gleitring umgebender Laufring angetrieben wird. Hierbei wird der Laufring zum Gleitring und dieser zur Antriebswelle geführt. Eine derartige Anordnung ist nicht nur aufwendig sondern unterliegt hohem Verschleiß und ist darüber hinaus sehr reparaturunfreundlich.

Durch die deutsche Patentschrift 34 39 966 ist eine Transportvorrichtung für Stückgüter oder dergleichen mit die Stückgüter unmittelbar unterstützenden Wälzkörpern, die unterhalb einer Platte oder plattenartig sich ergänzenden Segmenten auf tragenden, wälzenden Antriebseinrichtungen angeordnet und in Durchtrittsöffnungen der Platte geführt sind, wobei die Wälzkörper über die Plattenoberseite vorstehen und in geradlinigen Reihen quer zur Transportrichtung angeordnet sind, bekannt geworden, wobei die wälzenden Antriebseinrichtungen aus zylindrischen Wellen bestehen, die jeweils mittig unter den Reihen der Wälzkörper sowie parallel dazu gelagert sind. Derartige als Kugelrollenbahnen bekannt gewordenen Transportvorrichtungen für Stückgüter besitzen den Nachteil der hohen Hertz'schen Pressung gegenüber zu transportierendem Gut und darüber hinaus sind derartige Einrichtungen sehr aufwendig, da unbedingt Sorge dafür getragen werden muß, daß die Antriebswelle über Lagerungen fest mit den die Führungen für die Kugeln tragenden Platten verbunden sind, da sonst ein Wegrutschen der Kugeln unter die Platten nicht ausgeschlossen werden kann. Durch die hohe Hertz'sche Pressung tritt nicht nur an dem zu transportierenden Gut sondern auch an den Lagern für die Antriebswelle und an der Antriebswelle selbst ein hoher Verschleiß auf und es muß bei Reparatur die komplette Fördereinrichtung ausgebaut werden; dies führt zum langzeitigen Ausfall einer derartigen Fördereinrichtung.

Ausgehend hiervon liegt der vorliegenden Erfindung die Aufgabe zugrunde, eine Friktionsrollenbahn aus Einzelelementen aufzubauen, wobei die Gehäuseabdeckung und die Friktionsrollen begehbar und überfahrbar sind, ohne daß Beschädigungen an der Bahn, an Personen oder an die Friktionsrollenbahn überfahrenden Fahrzeugen entstehen und daß eine Reparatur ohne Abbau einer gesamten aus mehreren Elementen bestehenden Friktionsrollenbahn durchgeführt werden kann. Diese Aufgabe wird durch die kennzeichnenden Merkmale des Anspruchs 1 gelöst. Durch Auflösen der Friktionsrollenbahn in Rollenbahnelemente mit je einer Antriebswelle und darauf lose angeordneten Friktionsrollen und durch das erfindungsgemäße Verbinden der einzelnen Rollenbahnelemente mit U-förmigen Kastenprofilen, die gleichzeitig die Übertragungselemente vom Antrieb bis zu den Antriebswellen enthalten und durch Führung der Friktionsrollen an ihren Durch-trittsöffnungen in der Gehäuseabdeckung wird eine Friktionsrollenbahn geschaffen, die aus Einzelelementen besteht, wobei jedes Verschleißteil, insbesondere Antriebswelle und Friktionsrolle leicht ausbaubar ist. Die Friktionsrollenbahn ist gefahrlos begehbar, da bei Auftreten auf eine Friktionsrolle mit dem Fuß diese stehenbleibt, während die anderen Friktionsrollen weiterlaufen. Beim Überfahren der Friktionsrollenbahn mit Fahrzeugen, beispielsweise Gabelstaplern, bleibt die Antriebswelle unbelastet, da die wirkenden Kräfte über die Gehäuseabdeckung abgeleitet werden. Durch die Klemmung der Abdeckungen am Gehäuse ist ein einfacher Zugang zu den auszutauschenden Friktionsrollenelementen leicht möglich.

Eine Ausgestaltung des Erfindungsgegenstandes wird in Anspruch 2 unter Schutz gestellt. Hierbei läßt sich der Verschleiß an den Führungen, falls diese aus weicherem Material bestehen als die Friktionsrollen selbst durch Austausch verschlissener Führungen beseitigen, ohne daß die Rollenbahn demontiert werden muß.

In noch weiterer Ausgestaltung des Erfindungsgegenstandes wird vorgeschlagen, daß mindestens ein u-förmiges Kastenprofil an seinem dem Gehäuse gegenüberliegenden Schenkel Schlitze für die Ein-.führung der Antriebswellen besitzt. Hierdurch wird eine leichte Auswechselbarkeit eines kompletten Friktionselements bestehend aus Welle und Friktionsrollen einschließlich Übertragungseinrichtungen für den Antrieb ermöglicht.

Die in Anspruch 4 unter Schutz gestellte Ausgestaltung zeigt eine weitere reparaturfreundliche Einrichtung, bei der keine feste Verbindung zwischen Abdeckung und Antriebswelle zur sicheren Führung der Friktionsrollen vorhanden sein muß.

Durch das in Anspruch 5 unter Schutz gestellte mindestens eine Rollenpaar, welches im Abstand unterhalb der Antriebswelle am Gehäuseboden angeordnet ist, ist auch Vorsorge dafür getroffen, daß bei zu hoher Belastung und Durchfedern der Welle ein bleibendes Durchbiegen der Antriebswelle vermieden wird; der Abstand zwischen dem mindestens einen Rollenpaar und jeder Antriebswelle ist so bemessen, daß die Durchbiegung der Antriebswelle in ihrem elastischen Bereich bleibt. Anstelle des Rollenpaares kann auch ein feststehendes Abstützelement treten, welches ebenfalls bei unbelasteter Antriebswelle einen Abstand zu dieser besitzt.

Die in Anspruch 6 unter Schutz gestellte Ausgestaltung dient zur Übertragung der durch seitlichen Stoß an die Friktionsrollen auftretenden Kräfte, welche von den Schenkeln der U-förmigen Kastenprofile aufgenommen werden, wenn diese quer zur Förderrichtung entstehen und die durch die Klemmungen der einzelnen Abdeckungen an den Gehäusen aufgefangen werden, falls diese in Förderrichtung auftreten sollten, ohne daß die Lagerungen der Antriebswellen mit schädlichen Kräften beaufschlagt werden.

Durch die in Anspruch 7 unter Schutz gestellte Abdekkung der U-förmigen Kastenprofile wird der komplette Antrieb gegen Fremdeinflüsse, beispielsweise Hineinfallen von Gegenständen, geschützt.

In der nachfolgenden Zeichnung wird der Gegenstand der Erfindung anhand eines Ausführungsbeispiels näher erläutert.

Es zeigen:

Fig. 1 die Ansicht auf die Friktionsrollenbahn
Fig. 2 die Draufsicht auf die Friktionsrollenbahn
Fig. 3 ein Rollenbahnelement
Fig. 4 einen im vergrößerten Maßstab dargestellten Querschnitt durch ein Rollenbahnelement und
Fig. 5 einen weiteren im vergrößerten Maßstab dargestellten Querschnitt duch ein Rollenbahnelement.

In den einzelnen Figuren werden gleiche Bauteile mit denselben Bezugsziffern bezeichnet.

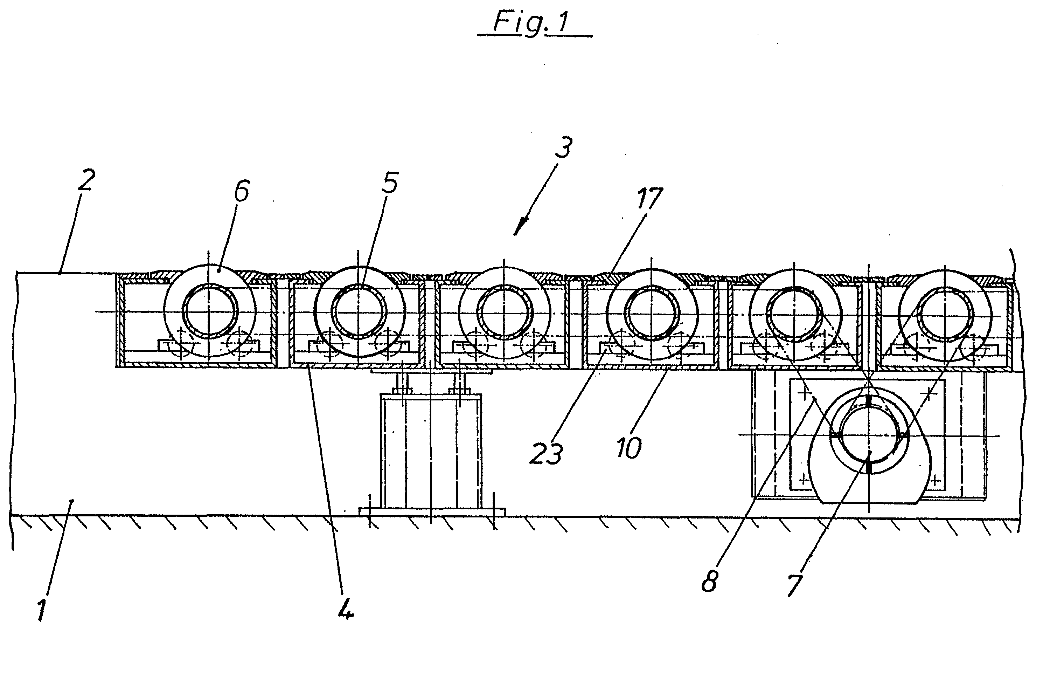

Das in Fig. 1 dargestellte Ausführungsbeispiel stellt ein Rollenbahnstück in einer flachen Grube 1 dar, wobei Fahrzeuge entlang eines Hallenbodens 2 fahren und auch die Friktionsrollenbahn 3 überfahren können, ohne daß Beschädigungen an dieser auftreten.

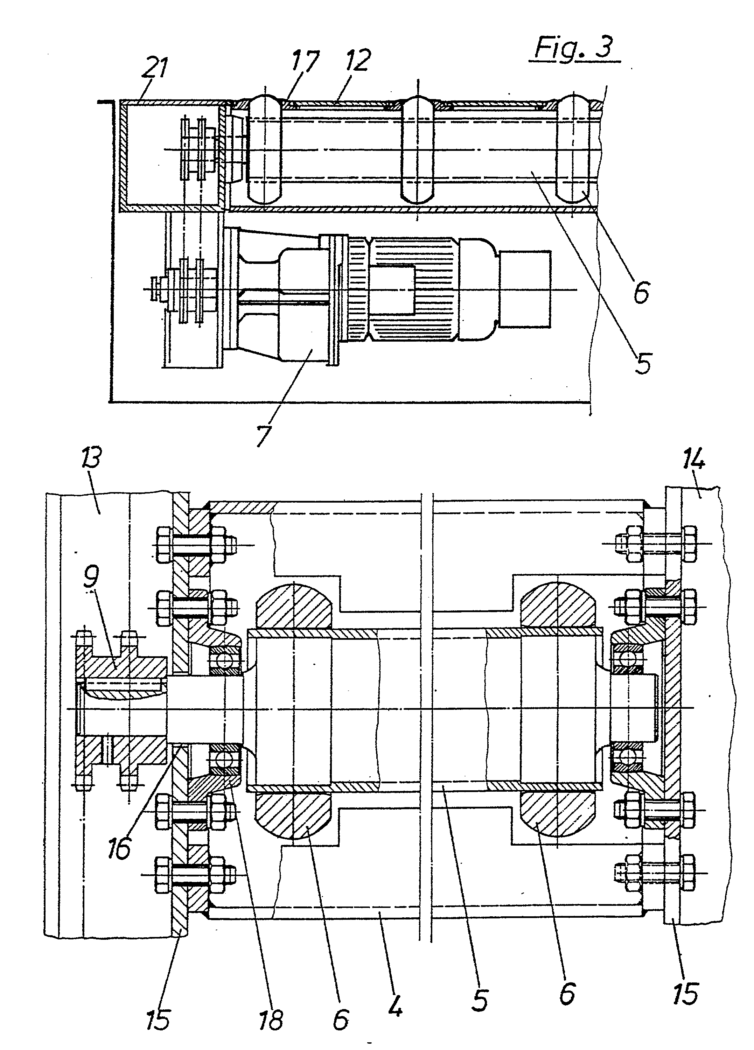

In Gehäusen 4 sind Antriebswellen 5 mit Friktionsrollen 6 vorgesehen. Die Antriebswellen 5 werden von einem Antriebsmotor 7 über Antriebsketten 8 und Antriebskettenräder 9 (vgl. Fig. 3) angetrieben.

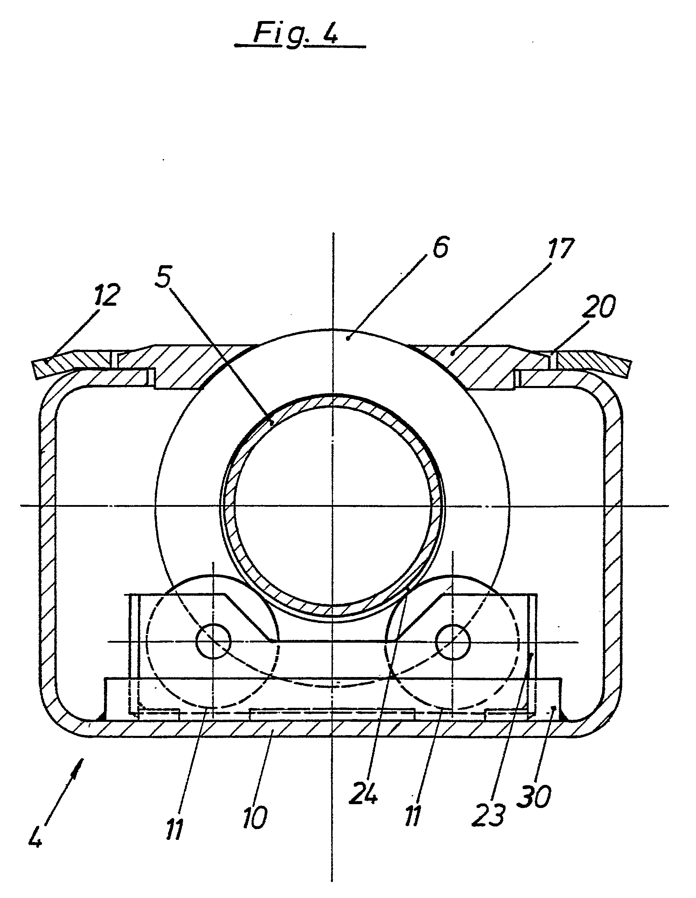

An den Gehäuseböden 10 sind Rollenpaare 11 (vgl. Fig. 4) angeordnet, die bei zu hoher Belastung der Antriebswellen 5 durch darüber fahrende Fahrzeuge die Antriebswellen 5 so abstützen, daß lediglich eine elastische Verformung der Antriebswellen 5 auftritt.

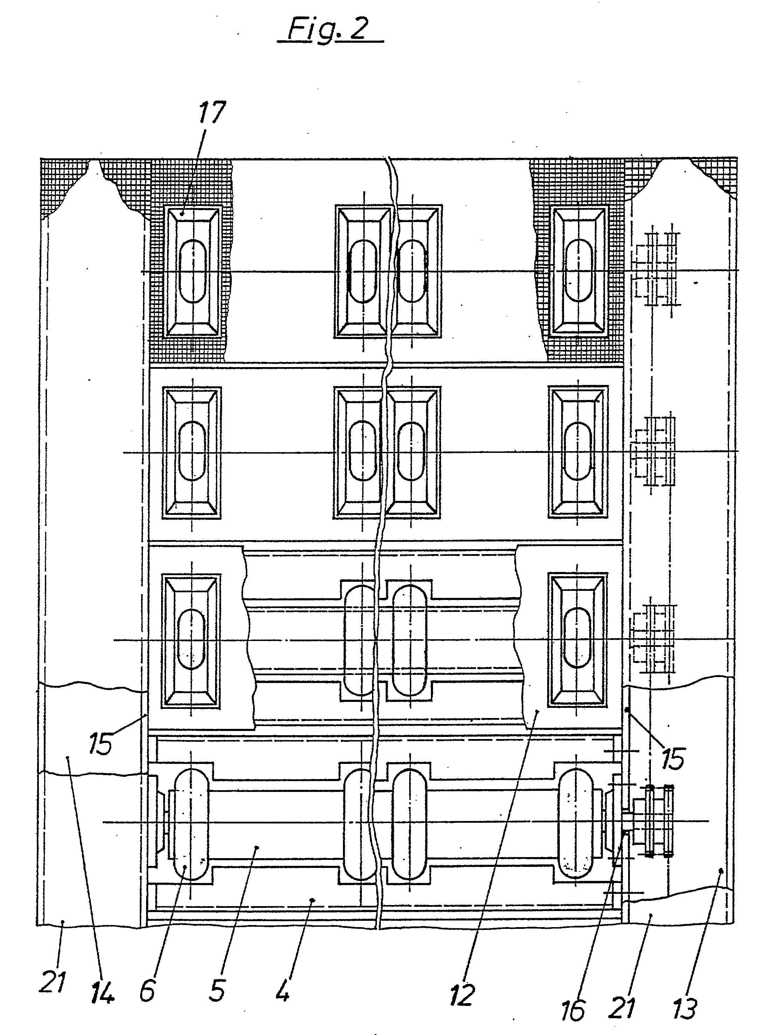

Wie in Fig. 2 dargestellt, wird jede Antriebswelle 5 mit den auf dieser lose angeordneten Friktionsrollen 6 von dem Gehäuse 4 seitlich und nach unten umschlossen, während das Gehäuse selbst eine Abdeckung 12 trägt. Die Gehäuse 4 sind stirnseitig mit U-förmigen Kastenprofilen 13, 14 verbunden, wobei mindestens ein Innenschenkel 15 des Kastenprofils 13 oder 14 Schlitze 16 für die Einführung der Antriebswellen 5 trägt.

Die Abdeckungen 12 legen sich an die jeweiligen Innenschenkel 15 der U-förmigen Kastenprofile 13, 14 an, so daß bei einem Querüberfahren der Friktionsrollenbahn auftretende Kräfte direkt von den Friktionsrollen über auswechselbare Führungen 17 der Friktionsrollen 6 über die Abdeckungen 12 abgeleitet werden.

Fig. 3 zeigt in vergrößertem Maßstab die Antriebswelle 5, die als Hohlwelle ausgeführt ist mit auf dieser angeordneten Friktionsrollen 6. Die Friktionsrollen 6 sind frei verschieblich auf der Antriebswelle 5 angeordnet und wie bereits zu Fig. 2 beschrieben, an den auswechselbaren Führungen 17 der Abdeckung 12 geführt.

Im Ausführungsbeispiel nach Fig. 3 ist die Antriebswelle 5 auf der einen Seite am Innenschenkel 15 des Kastenprofils 14 gelagert, während die Antriebswelle 5 auf der Antriebsseite über den Schlitz 16 des Innenschenkels 15 des U-förmigen Kastenprofils 13 nach außen geführt ist. Eine Lagerung 18 der Antriebswelle 5 ist am Innenschenkel 15 im Ausführungsbeispiel angeschraubt. Die Antriebskettenräder 9 befinden sich im U-förmigen Kastenprofil 13. Bei dieser Anordnung kann durch Lösen der Schrauben an der Lagerung 18 das komplette Rollenbahnelement, bestehend aus Antriebswelle 5, Friktionsrolle 6, den Lagerungen 18 und den Antriebskettenrädern 9, nach Lösen der Abdeckung 12 und 21 aus dem Gehäuse 4, welches im Ausführungsbeispiel gemäß Fig. 3 mit den inneren U-Schenkeln 15 verschraubt ist, herausgenommen werden.

Der in Fig. 4 in vergrößertem Maßstab dargestellte Querschnitt durch ein Rollenbahnelement zeigt das Rollenpaar 11, welches auf einem Lagergestell 23 angeordnet ist. Das Lagergestell 23 ist auf dem Gehäuseboden 10 aufgelegt und wird von zwei Führungsleisten 30, welche in Richtung der Achse der Antriebswelle vor und hinter dem Lagergestell 23 mit dem Gehäuseboden 10 fest verbunden sind, begrenzt. Durch diese Ausgestaltung können Toleranzen zwischen der Längsachse des Gehäuses 4 an der Achse der Antriebswelle 5 selbständig ausgeglichen werden. Durch eine austauschbare Anordnung der Rollen 11 des Rollenpaares ist es möglich, anstelle der Rollen auch feststehende Abstützelemente einzusetzen, die wie die Rollen 11 einen Abstand 24 von der Antriebswelle besitzen.

Die Friktionsrollen 6, die als ballige Reibringe ausgeführt sind, umschließen die Antriebswelle 5 zufolge ihres geringen größeren Durchmessers im unteren Bereich der Antriebswelle im Abstand. Durch die ballige Ausführung der Friktionsrollen 6 wird bei einem Überfahren durch Fahrzeuge dem Fahrzeugrad geringerer Widerstand dargeboten, genau wie beim Transportieren von Paletten eine eindeutige Förderung in Förderrichtung gewährleistet wird, ohne daß eine Beschädigung der Palettenunterseiten durch die Friktionsrollenkanten auftreten können. In den Abdeckplatten 12 sind Durchtrittsöffnungen 20 im Bereich der Friktionsrollen 6 vorgesehen, so daß die Führungselemente 17 als Verschleißteil leicht ein- und ausgebaut werden können.

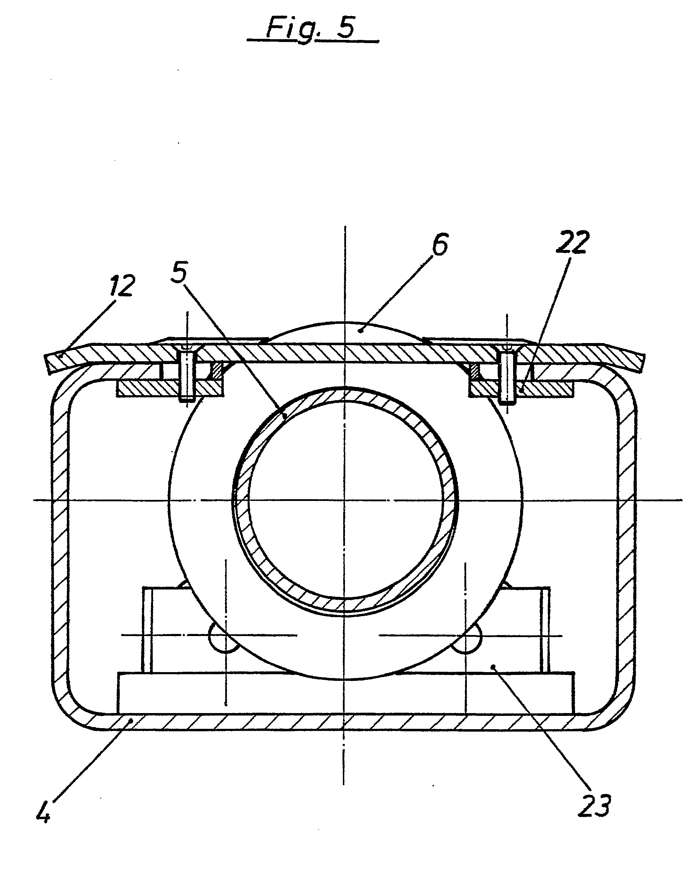

In dem in Fig. 5 in vergrößertem Maßstab dargestellten Gehäuse 4 wird der Bereich dargestellt, an dem die Abdeckplatte 12 mit dem Gehäuse 4 verbunden ist. Dies geschieht über Klemmen 22, die mittels Schrauben 26 zum einen das Gehäuse 4 hintergreifen und zum anderen über eine Stütze 27 sich an der Abdeckplatte 12 abstützen. Damit wird es möglich, durch Verschwenken der Klemmen 22 um 90° mit geringstem Aufwand die einzelnen Abdeckplatten 12 von den einzelnen Gehäusen 4 von oben her abzunehmen und die Verschleißteile leicht auszuwechseln.

## Patentansprüche

1. Friktionsrollenbahn mit einem Gehäuse (4) einer Gehäuseabdeckung (12) mit Durchtrittsöffnungen (20) für die Gehäuseabdeckung teilweise durchdringende Friktionsrollen (6), die gegen axiale Verschiebung gesichert sind und die von einer im Gehäuse (4) verlaufenden Antriebswelle (5) angetrieben werden, dadurch gekennzeichnet, daß jedes Gehäuse (4) eines Rollenbahnelements (5, 6) mit seinen Stirnseiten mit einem in Förderrichtung verlaufenden abdeckbaren U-förmigen Kastenprofil (13, 14) verbunden ist, daß jede Antriebswelle (5) an den U-förmigen Kastenprofilen (13, 14) gelagert ist, daß die den Antrieb auf die Antriebswellen (4) übertragenden Elemente (9) in mindestens einem der U-förmigen Kastenprofile (13 bzw. 14) angeordnet sind, daß die Gehäuseabdeckung (12) mittels Klemmung mit den Gehäusen (4) verbunden ist und daß die in Förderrichtung verlaufenden Durchtrittsöffnungen (20) Führungen (17) für die Friktionsrollen (6) tragen.

2. Friktionsrollenbahn nach Anspruch 1, dadurch gekennzeichnet, daß jedes Rollenbahnelement (5, 6) mit einer klemmbaren Abdeckung (12) mit auswechselbaren Führungen (17) für Friktionsrollen an den Durchtrittsöffnungen (20) versehen ist.

3. Friktionsrollenbahn nach Anspruch 1 oder 2, dadurch gekennzeichnet, daß mindestens ein u-förmiges Kastenprofil (13 bzw. 14) an seinem, dem Gehäuse (4) gegenüberliegenden Schenkel (15) Schlitze (16) für die Einführung der Antriebswellen (4) besitzt.

4. Friktionsrollenbahn nach einem der vorhergehenden Ansprüche, dadurch gekennzeichnet, daß lose auf der Antriebswelle (4) verschiebbare, ballige Reibringe (6), die teilweise über die Abdeckung (12) hinausragen und die an den Führungen (17) der Abdeckungen (12) geführt werden die Friktionsrollen bilden.

5. Friktionsrollenbahn nach einem der vorhergehenden Ansprüche, dadurch gekennzeichnet, daß im Abstand von der Antriebswelle (5) am Gehäuseboden mindestens ein Rollenpaar (11) unterhalb der Antriebswelle (5) angeordnet ist.

6. Friktionsrollenbahn nach einem der vorhergehenden Ansprüche, dadurch gekennzeichnet, daß sich die Abdeckungen (12) der Gehäuse (4) an den den Gehäusen (4) gegenüberliegenden Schenkel (15) der U-förmigen Kastenprofile (13, 14) abstützen.

7. Friktionsrollenbahn nach einem der vorhergehenden Ansprüche, dadurch gekennzeichnet, daß die U-förmigen Kastenprofile (13, 14) mit Abdeckungen (21) versehen sind.

## Claims

1. A friction roller conveyor having a housing (4) and a housing covering (12) with openings for friction rollers (6) which penetrate partially through the housing covering and which are secured against axial displacement and are driven by a drive shaft (5) extending in the housing (4), characterised in that each housing (4) of roller conveyor element (5, 6) is connected by its ends to a U-shaped box section (13, 14) which extends in the conveying direction and can be covered, that each drive shaft (5) is mounted on the U-shaped box sections (13, 14), that the elements (9) transmitting the drive to the drive shafts (4) are disposed in at least one of the U-shaped box sections (13 or 14), that the housing covering (12) is connected to the housings (4) by means of clamping and that the openings extending in the conveying direction carry guides (17) for the friction rollers (6).

2. A friction roller conveyor according to Claim 1, characterised in that each roller conveyor element (5, 6) is provided, at the openings (20), with a covering (12) with replaceable guides (17) for friction rollers.

3. A friction roller conveyor according to Claim 1 or 2, characterised in that at least one U-shaped box section (13 or 14) has, in its side (15) opposite the housing (4), slots (16) for the introduction of the drive shafts (4).

4. A friction roller conveyor according to any one of the preceding Claims, characterised in that cambered friction rings (6), which are displaceable loosely on the drive shaft (4) and which project partially above the covering (12) and are guided on the guides (17) of the coverings (12), form the friction rollers.

5. A friction roller conveyor according to any one of the preceding Claims, characterised in that at least one pair of rollers (11) is disposed below the drive shaft (5), at the bottom of the housing, with spacing from the drive shaft (5).

6. A friction roller conveyor according to any one of the preceding Claims, characterised in that the coverings (12) of the housings (4) are supported on the sides (15) of the U-shaped box sections (13, 14) situated opposite the housings (4).

7. A friction roller conveyor according to any one of the preceding Claims, characterised in that the U-shaped box sections (13, 14) are provided with coverings (21).

## Revendications

1. Transporteur à rouleaux à friction comportant un carter (4), un capot de carter (12) comportant des ouvertures de passage (20) pour des rouleaux à friction (6) traversant partiellement le capot de carter, qui sont empêchés de se déplacer axialement et sont entraînés par un arbre moteur (5) s'étendant dans le carter (4), caractérisé en ce que chaque carter (4) d'un élément de transporteur à rouleaux (5, 6) est relié par ses faces frontales à un profilé en caisson en U (13, 14) recouvrable s'étendant dans le sens de transport, en ce que chaque arbre moteur (5) est placé sur les profilés en caisson en U (13, 14), en ce que les éléments (9) transmettant le mouvement aux arbres moteurs (4) sont placés dans l'un au moins des profilés (13 ou 14), en ce que le capot de carter (12) est relié aux carters (4) par serrage et en ce que les ouvertures de passage (20) s'étendant dans le sens de transport comportent des guides (17) pour les rouleaux à friciton.

2. Transporteur à rouleaux à friction selon la revendication 1, caractérisé en ce que chaque élément de transporteur à rouleaux (5, 6) comporte un capot (12) pouvant être fixé par serrage, pourvu de guides amovibles (17) pour des rouleaux à friction sur les ouvertures de passage (20).

3. Transporteur à rouleaux à friction selon la revendication 1 ou 2, caractérisé en ce qu'au moins un profilé en caisson en U (13 ou 14) comporte sur sa branche (15) opposée au carter (4) des fentes (16) pour l'introduction des arbres moteurs (5).

4. Transporteur à rouleaux à friction selon l'une des revendications précédentes, caractérisé en ce que des anneaux de friction bombés (6), pouvant se déplacer librement sur l'arbre moteur (4), qui dépassent en partie du capot (12) et sont guidés sur les guides (17) des capots (12), constituent les rouleaux à friction.

5. Transporteur à rouleaux à friction selon l'une des revendications précédentes, caractérisé en ce qu'au moins une paire de galets (11) soutenant l'arbre moteur est placée au fond du carter à distance de l'arbre moteur (5).

6. Transporteur à rouleaux à friction selon l'une des revendications précédentes, caractérisé en ce que les capots (12) des carters (4) s'appuient sur les branches (15) des profilés en caisson en U (13, 14) opposées aux carters (4).

7. Transporteur à rouleaux à friction selon l'une des revendications précédentes, caractérisé en ce que les profilés en caisson en U (13, 14) comportent des capots (21).

Fig.1

EP 0 294 498 B1

_Fig. 2_

*Fig. 3*

<u>*Fig. 4*</u>

## Fig. 5